# EUROPEAN PATENT SPECIFICATION

(11) **EP 1 793 685 B1**
(45) Date of publication and mention of the grant of the patent: **29.02.2012**
(21) Application number: 05800284.1
(22) Date of filing: 23.09.2005
(51) Int. Cl.: A23K 1/18, B65D 21/02, B65D 85/72

(54) **MORE APPEALING PET FOOD PRODUCTS AND THEIR METHODS OF PREPARATION**
ATTRAKTIVERE TIERFUTTERPRODUKTE UND HERSTELLUNGSVERFAHREN DAFÜR
ALIMENTS POUR ANIMAUX PLUS ATTRACTIFS ET LEURS PROCEDES DE PREPARATION

(30) Priority: 27.09.2004 US 614008 P
(43) Date of publication of application: 13.06.2007
(60) Divisional application: 09003473.7
(73) Proprietor: Nestec S.A., 1800 Vevey (CH)
(72) Inventor: BENNETT, Harold, Festus, Missouri 63028 (US); ETHERIDGE, Gary, Brentwood, Missouri 63144 (US); KRUEGER, Nina, Leigh, St. Louis, MO 63111 (US); RAYNER, Jean, Luz, St. Joseph, MO 64507 (US)
(74) Representative: Lock, Graham James
(86) International application number: PCT/US2005/034171
(87) International publication number: WO 2006/036797

(56) References cited:
- WO-A-2004/045302
- WO-A-2004/045303
- FR-A- 2 664 471
- US-A- 4 113 095
- US-A- 4 276 311
- US-A- 5 377 860
- US-A- 5 419 451
- US-A1- 2003 062 365
- US-A1- 2003 099 759

## Description

### BACKGROUND

The present invention is directed to pet food products. More specifically, the present invention is directed to pet food products that are complete nutritionally balanced meals for pets that have a taste and aroma comparable to food obtainable in restaurants.

Pets often prefer foods that are eaten by their owners over commercial pet foods. Pets typically derive a high level of satisfaction from consuming human foods even including table scraps. As a result, pet owners frequently give their pets table scraps even though most table scraps are not nutritionally complete foods for companion animals. In some cases pet owners prefer to feed their pets human foods rather than pet foods because of the foul smelling odor that often accompanies commercial pet foods.
WO 2004/045303 discloses a packaged pet food that includes one or more solid food components in a sauce or gel. The sauce or gel is incorporated into the pet food and may contain gelatinised starches, hydrated gums and materials such as agar agar.
WO 2004/045302 discloses a canned food including a sliced meat analogue. The pet food includes two or more slices of meat material in a sauce or gel. The sauce or gel may contain gelatinised starches, hydrated gums and materials such as agar agar.
US 4,276,311 discloses a shelf stable food product that can be used for domestic animals. The product comprises a solid protein, fat and moisture, including gravies.
FR 2664471 discloses a complete meal for a dog or a cat. The meal compositions may contain beef, liver and meats such as turkey; vegetables such as carrots, runner beans and peppers; cereals; sauces and a setting agent.
US-A-5377860 discloses a double seal food container comprising a base portion and a lid portion made from resilient polymeric material. The base and the lid are constructed with inner and outer sealing areas to provide a self-reinforcing seal configuration wherein the initial engagement of either the inner or the outer seals urges the other seal into engagement.

There is also a need for more convenient containers for storing pet foods that will facilitate their storage, will not interfere with shelf life and that can provide for reuse in the event that only part of a meal is consumed by a pet.

Thus, new pet food products are needed that can provide a high level of eating satisfaction for companion animals and that also have a high nutritional and caloric value, providing all the constituents of a balanced diet for pet animals. Novel storage containers for these products that provide for more convenient and attractive storage and that are more easily used and easily reused are also needed.

### SUMMARY

The present invention is directed to pet food products as defined in the appended claims.
In an embodiment, the present invention provides a pet food product that contains a dog food having the appearance of food for human consumption as found in delicatessens. Thus, the pet food product is more appealing to pet owners.

Described herein is a unique packaging or container system that provides an attractive appearance while holding the pet food and is stackable. For example, the packaging or container system can have one or more portions that are partially or entirely translucent or transparent. Further, the container system can be constructed from compounds that will protect the food product from harmful ultraviolet light. The container can also be retortable.

The present invention provides a method for providing a pet food having increased consumer appeal comprising placing a pet food according to the invention into a retortable container system. The pet food is preferably in the form of human delicatessen food comprising a gravy which comprises water, starm, dextrose, glycine and a flavouring and at least two ingredients selected from the group of ingredients consisting of meat, soy, vegetables, grains and pasta.

Described herein, certain methods further involve placing the pet food product into a stackable container having an easily removable, resealable lid.

Described herein, certain methods further involve placing the pet food product into a stackable container system comprising a container body and an easily removable, resealable lid wherein the lid is adapted to support the container.

Described herein, certain methods further involve placing the pet food product into a stackable container system comprising a container body and an easily removable, resealable lid. The lid can be adapted to support the container. The outer circumference of the lid can be larger than the outer circumference of the container body.

The container described herein has a body that has one or more reliefs cut into a tab at a corner of the container body.

The container described herein has a body that has one or more reliefs cut into tabs at opposing corners of the container body.

The container described herein has a lid that has at least one step down groove towards the heat seal of the lid stock.

Certain methods described herein further involve adding a grain which can be one or more of barley, rice, wild rice, brown rice, oats, millet and their combinations.

Certain methods described herein further involve adding a vitamin mixture.

Certain methods described herein further involve adding a mineral mixture.

Certain methods described herein further involve preparing a gravy from water, starch, dextrose, glycine, and a flavoring.

Certain methods described herein involve adding a vegetable which can be one or of the following: potatoes, squash, zucchini, spinach, radishes, asparagus, tomatoes, cabbage, peas, carrots, spinach, corn, green beans, lima beans, broccoli, brussel sprouts, cauliflower, celery, cucumbers, turnips, yarns and their mixtures.

Certain methods described herein further involve adding one or more spices including parsley, scallions, sage, rosemary, basil, thyme, chives or their mixtures.

Certain methods described herein further involve adding pasta.

In an embodiment, certain methods further involve adding one or more meats including chicken, beef, pork, key, fish, lamb and their mixtures.

As described above, the present invention is directed to pet food compositions having increased consumer appeal comprising: a gravy which comprises water, starm, dextrose, glycine and a flavouring and at least two ingredients from the group of ingredients consisting of meat, soy, vegetables, grains and pasta. The composition is provided in the form of human delicatessen food.

The pet food composition described herein can include a stackable container having an easily removable, resealable lid containing the pet food.

The pet food composition described herein can include a stackable container system that includes a container body which contains the pet food and an easily removable, resealable lid wherein the lid is adapted to support the container.

The pet food composition described herein can further include a stackable container system having a container body which contains the pet food and an easily removable, resealable lid. The lid can be adapted to support the container and the outer circumference of the lid can be larger than the outer circumference of the container body.

The pet food composition described herein can include a stackable container system comprising a container body which contains the pet food and an easily removable, resealable lid wherein the lid is adapted to support the container. The container body can have one or more reliefs cut into a tab at a corner of the container body.

The pet food composition described herein can include a stackable container system comprising a container body which contains the pet food and an easily removable, resealable lid wherein the lid is adapted to support the container. The container body can have one or more reliefs cut into tabs at opposing corners of the container body.

The pet food composition described herein can include a stackable container system comprising a container body which contains the pet food and an easily removable, resealable lid wherein the lid is adapted to support the container. The lid can have at least one step down groove towards the heat seal of the lid stock.

In an embodiment, the pet food composition further includes one or more grains. The grains can be barley, rice, wild rice, brown rice, oats, millet and their combinations.

In an embodiment, the pet food composition further includes a vitamin mixture.

In certain embodiments the pet food composition further includes a mineral mixture.

The pet food composition of the invention includes a gravy that includes water, starch, dextrose, glycine, and a flavoring.

In an embodiment, the pet food composition includes one or more vegetables. Suitable vegetables include potatoes, squash, zucchini, spinach, radishes, asparagus, tomatoes, cabbage, peas, carrots, spinach, corn, green beans, lima beans, broccoli, brussel sprouts, cauliflower, celery, cucumbers, turnips, yarns and their mixtures.

In an embodiment, the pet food composition includes one or more spices. Suitable spices include parsley, scallions, sage, rosemary, basil, thyme, chives and their mixtures.

In an embodiment, the pet food composition includes pasta.

In an embodiment, the pet food composition includes meat. Suitable meats include chicken, beef, pork, turkey, fish, lamb and their mixtures.

Described herein is a container system for pet foods of the invention. For example, the container system comprises an easily removable, resealable lid and a container body defining an interior for receiving pet food, the container body having one or more portions that is selected from the group consisting of translucent, transparent and combinations thereof, wherein the container system is stackable.

The entire container body can be transparent or translucent or a combination thereof.

The container described herein is retortable.

The container system described herein further comprises a pet food product.

The pet food product can be visible through one or more portions of the container body.

The container system described herein can comprise a label surrounding the container body, wherein the label has opaque portions and transparent portions.

The lid of the container system described herein can be adapted to support the container.

The lid can include at least one groove.

The outer circumference of the lid can be larger than the outer circumference of the container body.

The container body described herein can have one or more reliefs cut into a tab at a corner of the container body.

The container body described herein can have one or more reliefs cut into tabs at opposing corners of the container body.

The lid can have one or more step down grooves.

The container body can be constructed and arranged as to reduce or completely eliminate UV light from reaching the interior of the container system.

An advantage of the present invention present invention is to provide an improved pet food product that is aesthetically appealing.

Another advantage of the present invention is to provide an visually appealing pet food product within a transparent container.

Additional features and advantages are described herein, and will be apparent from, the following Detailed Description and the figures.

### BRIEF DESCRIPTION OF THE FIGURES

Figure 1 is a perspective view of a pet food container system described herein including the lid and the container body in one embodiment of the present invention.

Figure 2 is a perspective view of the container body described herein

Figure 3 is a perspective view of the container body described herein including a foil

Figure 4 is a top view of the lid

Figure 5 is a top view of the container body

Figure 6 is a perspective view of the bottom side of the container body

Figure 7 is a side view of two stacked pet food container systems

Figure 8 is an end view of two stacked pet food container system

### DETAILED DESCRIPTION

The present invention is directed to pet food products which are complete nutritionally balanced meals for pets that have a taste and aroma comparable to food obtainable in restaurants or delicatessens. The term "delicatessen foods" can be understood to mean, for example, fresh and ready to eat, prepared foods containing natural products. Natural products are those that do not contain processed foods.

In an embodiment, the present invention provides methods for providing a pet food having increased consumer appeal comprising placing a pet food according to the invention into a retortable container system. The pet food comprises a gravy comprising water, starm, dextrose, glycine and a flavouring; and at least two ingredients selected from the group of ingredients consisting of meat, soy, vegetables, grains and pasta. For example, the pet food products can generally contain varying amounts of a meat component, a condiment component, and a gravy component. The foods products are contained in attractive and functional containers that are easily used. They provide a pleasant aroma having both a meaty note and a clean cooked vegetable note imparted by the vegetable and grain ingredients. The pet food product has an aroma that is similar to canned human food products such as soups and stews.

As described above, the present invention is directed to pet food compositions having increased consumer appeal comprising: a gravy and at least two ingredients from the group of ingredients consisting of meat, soy, vegetables, grains and pasta. The composition is provided in the form of human delicatessen food.

The pet foods in alternative embodiments of the present invention can be prepared by preparing a gravy and, separately, mixing the selected meat with selected vegetables, grains and/or pasta and then preparing a suspension of the mixture in the gravy. The mixture can then be transferred to a canning machine and canned in the containers of the invention. The mixture is retorted for about 50 min. at a temperature of 121,1°C (250 °F) to create the final aroma and marinated flavor that is locked inside the package. Several specific food compositions are set forth in the examples.

The meat component can be prepared by mixing the selected meat ingredients together and processing them through an extruder as is known in the art. The meat can then be formed into discrete pieces or chunks. The meat itself can contain, for example, beef, pork, chicken, turkey, fish, lamb and combinations thereof as desired. The amount of the meat component in the meat mixture can range from about 20 % to about 70 wt.% in the meat mixture.

Generally, the meat mixture will contain a variety of other ingredients. For example, the mixture can and generally does contain an amount of wheat gluten. Wheat gluten can be added to a concentration of about 10 wt.% to about 40 wt.%, more preferably about 20 wt.% to about 30 wt.%, most preferred is a concentration of about 20 wt.% to about 25 wt.% in the meat mixture.

Other meat components can also be added to the mixtures. For example, liver pork, pork lungs, and pork meat mixtures can be added, in various concentrations. Where pork meat mix, as is known in the art, is included; it can be added at concentrations of up to about 40 wt.% in the meat mixture. Pork lungs can be added at a concentration of up to about 20 wt.% in the meat mixture. Pork liver can be added up to a concentration of about 20 wt.% in the meat mixture.

Soy protein concentrate can be added up to a concentration of about 8 wt.%, although up to about 2 wt.% is preferred. Other optional ingredients include titanium dioxide which can be added up to a concentration of about 1 wt.%, although up to about 0.3 wt.% is preferred. Di- or tri-calcium phosphate can be added up to a concentration of about 5 wt.%, concentrations of up to about 1.2 and 1.7 wt.% are preferred, respectively. Dextrose can be added up to a concentration of about 1.2 wt.%, up to about 0.3 wt.% is preferred. Glycine can be added at a concentration of up to about 3 wt.%, although about 0.7 wt.% is preferred. Dry choline chloride can be added up to a concentration of about 0.07 wt.%, up to about 0.02 wt.% is preferred.

A variety of other nutrients including mineral and vitamin mixtures can also be added to the meat mixtures. For example, known mineral premixes which are suitable for pets can be added in suitable concentrations which will ultimately depend upon the pet and the mineral mixture used. Known vitamin premixtures can be added in suitable concentrations which will ultimately depend upon the pet and the vitamin mixture used.

Various coloring agents can also be added to the meat mixtures as desired. For example, caramel color and/or the color red can sometimes be added in small amounts as desired. Water can also be added to obtain mixtures of the desired consistency for processing.

The meat can take on various forms including carved, sliced, marinated, and bi-color forms. Soy or other artificial meat products can also be substituted for meat.

The gravy contains water, starch, dextrose, glycine and an ingredient that adds flavor and aroma. It may also include coloring as desired, for example caramel coloring can be added. Generally, the gravy contains over about 90 wt.% water, preferably about 95 wt.%. Commercially prepared starch or starch combinations can be added. For example, modified starch CF 67, as is known, can be added up to about 5 wt.% but more preferably up to about 3.5 wt.% in the gravy mixture. Modified starch can also be added up to about 1 wt.%, more preferably up to about 0.75 wt.% in the gravy mixture. Glycine is generally added up to a concentration of about 1 wt.%, more preferably up to about 0.72 wt.%. Dextrose can be added up to a concentration of about 0.5 wt.% and more preferably up to about 0.3 wt.%. In addition, ingredients that add flavor and aroma to the gravy can also be included, as desired. Several such flavorings and aromas are known, are commercially available, and can be used at suitable concentrations. For example, concentrations of up to about 0.3 wt.%, and more preferably up to about 0.16 wt.% can be included.

Prior to mixing the gravy with other components of the pet food, the gravy is mixed by standard means well known in the art. The gravy preferably is heated to 76.7°C (170 °F) or alternatively when the gravy is prepared water having a temperature of 96.1°C (205 °F) can be used so that the gravy is hot when mixed with the other components of the pet food.

Any suitable grain that adds a pleasant taste and consistency to the final product can be selected and mixed with the meat mixture and gravy. Grains can be added at concentrations of up to about 5 wt.% in the final product. Suitable grains include, for example, powdered barley, barley, rice, wild rice, brown rice, oats and millet. Barley and wild rice are generally added to the food product in dry form, whereas rice is generally precooked. Barley can be added at concentrations of up to about 5 wt.% of the finished pet food product but more typically is added up to a concentration of 1.5 or 3 wt.% in the finished product. Wild rice and parboiled rice can be added up to concentrations of about 6 wt.% but are more typically added up to concentrations of about 1.5 wt.%.

Many vegetables are known and can be added to the pet food product provided that they are compatible with pet nutrition. Vegetables can be selected not only for their nutritional value but are also chosen based on their color and the aesthetic appearance they provide to the product. Suitable vegetables include, for example, potatoes, squash, zucchini, spinach, radishes, asparagus, tomatoes, cabbage, peas, carrots, spinach, corn, green beans, lima beans, broccoli, brussel sprouts, cauliflower, celery, cucumbers, turnips, yarns and combinations thereof. Vegetables can be added to the mixture in any suitable form including either fresh, dried, freeze dried or frozen form. In compositions that contain green beans and corn, these ingredients are generally added in frozen form. Generally, when added in dried form the vegetables have a concentration of up to about 4 wt.% in the final food product. When added in frozen form the vegetables have a concentration of up to about 5 wt.% in the dried food product. Generally, in compositions containing carrots, green peas, or spinach, these ingredients will be added in dry form. More preferably these ingredients are added at concentrations of about 0.3% to about 2%. Where carrots are included they can be added at concentrations of about 1.5 to about 2 wt.%.

Spices and herbs can be added to improve the taste and aroma of the product. Suitable spices include, for example, parsley, sage, rosemary, basil, thyme and chives. Spices are generally added in dried form at concentrations of between about 0.1 wt.% to 1 wt.%. When present the spices can be added to the meat gravy mixture prior to canning.

Virtually any pasta can be selected and added to the pet food product of the present invention. For example, rotini, macaroni, bow tie pasta, Macaroni, Fuisilli, Tortellini, Penne or other pasta types can be used. These ingredients can be added to the meat and gravy mixture prior to canning.

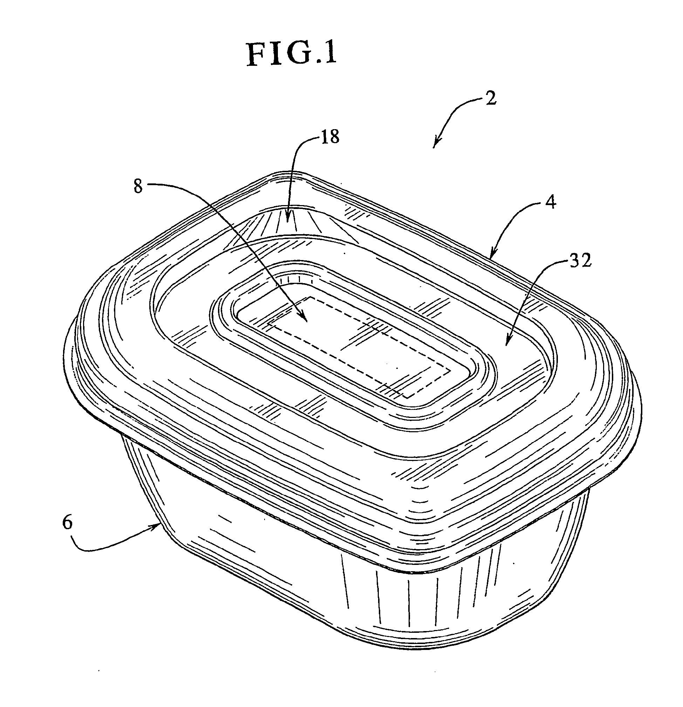

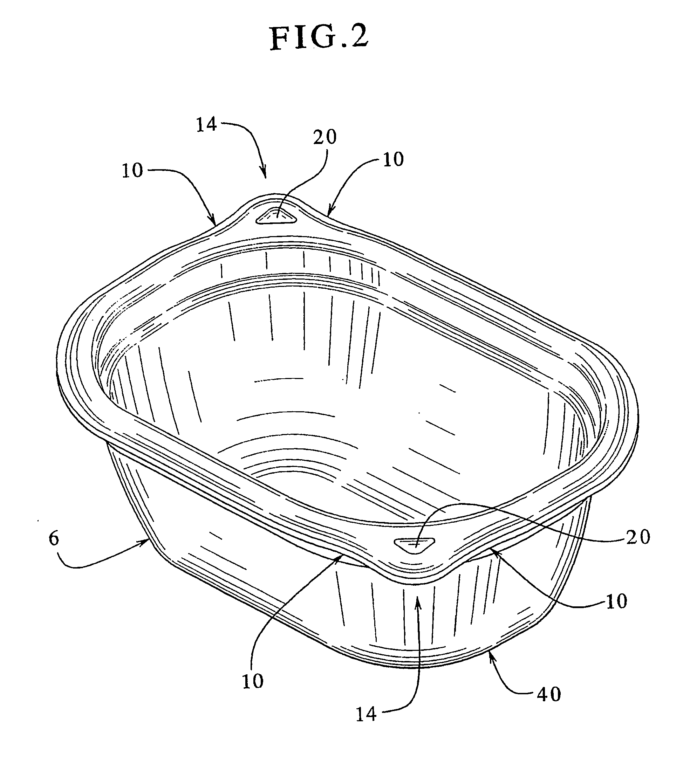

As illustrated in Figs. 1 and 2, the present invention can be provided in an attractive and functional packaging or container system 2 for the pet food product. For example, the container system 2 comprises a lid 4 and a vessel or container body 6. The lid 4 and container body 6 can be made of any material suitable for storing pet food products, but is preferably made of plastic, which has a clean modern looking appearance. Many plastic materials are known in the art and can be used. In another embodiment, the lid 2 can contain information 8 regarding a product such as, for example, the brand of the pet food product

It should be appreciated that the container system 2 can have any suitable shape that will allow pets to consume the food from the interior. For example, suitable shapes include circular, oval, square, rectangular or other asymmetric shapes.

Suitable containers systems 2 can have a lid 4 and a container body 6 that contain the pet food product in a substantially airtight form so that the aroma and flavor of the product is not released upon storage until after the lid 4 is removed. Preferred container systems 2 can comprise one or more portions that are clear, translucent or transparent material (e.g. plastic) such that the product can be visible through the walls of the container system 2. The entire container system 2 or portions of the container system 2 can be transparent, translucent or combinations thereof. For example, the entire container body 6 and lid 4 or portions of the container body 6 and lid 4 can be transparent or translucent.

Preferred container bodies 6 are configured such that the lid 4 can be removed and the pet food can then be consumed from the center of the container body 6. In preferred embodiments, the container system 2 is resealable by positioning the lid 4 on to the container body 6. In alternative embodiments, the container system 2 so constructed and arranged to be retortable for convenient processing and manufacturing of the food product.

The container system 2 can be constructed and arranged for reducing or blocking/eliminating ultraviolet light (UV) which protects the food product from fading or losing color over time as the package is exposed to fluorescent lighting in stores. It should be appreciated that reducing the UV can be understood to mean any amount of reduction in UV through the container system 2 (e.g. a difference between the UV outside container and UV inside container). For example, a UV inhibitor can be included as an additive blend in the plastic polymer of the container system 2 to absorb/reflect UV light. Either the lid 4, the container body 6 or both the lid 4 and container body 6 can be thermoformed and capable of reducing or eliminating UV.

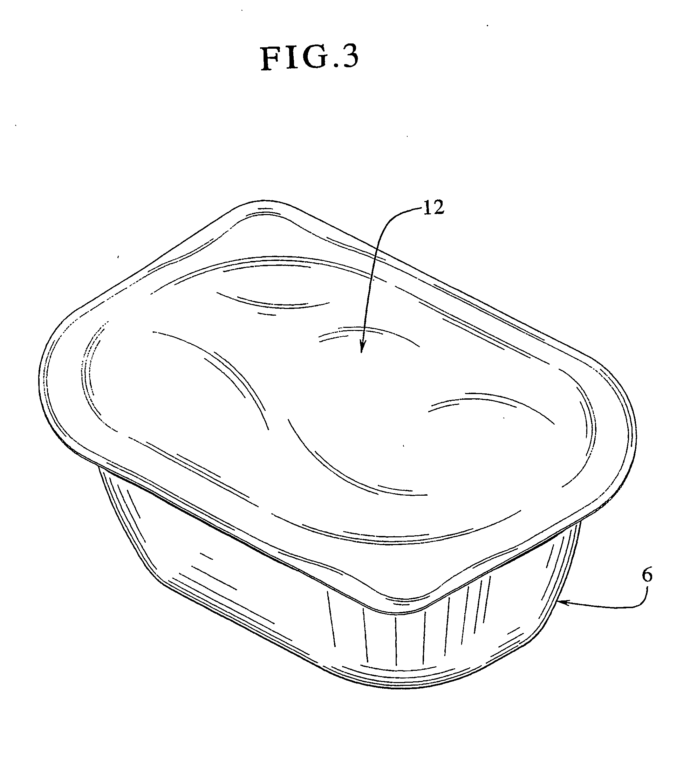

As illustrated in Fig. 3, the opening of the container body 6 can be covered with a foil or seal 12 that provides an air tight cover for the container body 6, for example, when the pet food is initially packaged to prevent contamination during storage. The foil or seal 12 covers the container body 6 opening and the lid 4 can be placed over the foil 12. Once a consumer removes the foil 12, the lid 4 can be used to cover the container body 6 for further storage.

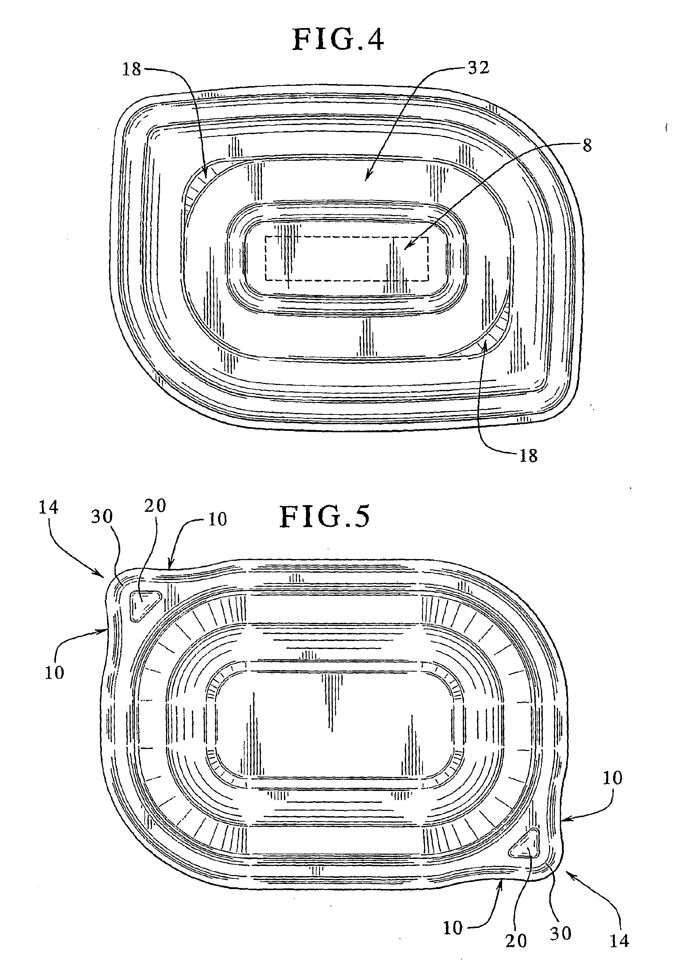

As illustrated in Fig. 4, the lid 4 can be configured with one or more step down grooves 18, for example, towards the heat seal of the lid 4 stock. This unique feature was previously avoided because of the potential for interference with flexible lid 4 stock. However,
the interference is utilized to hold the snap-on lid 4 level and to take up play in the snap fit between the lid 4 and container body 6. Ultimately, this preferred embodiment provides a clean neatly presenting package that is easier to open.

As illustrated in Fig. 5, the container body 6 can have one or more reliefs 10 cut into or near two opposing corners 14 of the container body 6. For example, the reliefs 10 can facilitate removal of the lid 4 from the container body 6. Such a configuration is unique in that although the lid 4 can be easily opened the configuration does not disrupt the holding power of the snap-on lid 4 which force is primarily derived diagonally across the lid 4 from opposing corners.

The container body 6 can include one or more thumb indents 20 in the container body corners 14. For example, these indents 20 when depressed cause the foil covering 12 to raise up and provide an easier finger hold for removal of the foil 12. The container body 6 can include one or more textured, thumb tapered areas or tabs 30 to allow, for example the consumer to conveniently lift or hinge open the lid 4.

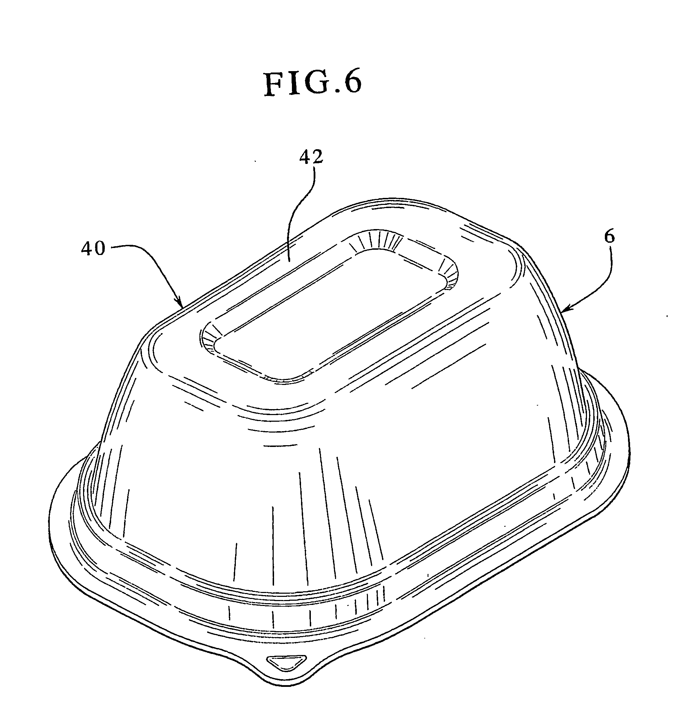

The lid 4 and the bottom 40 of the container body 6 can also be adapted with stabilizing or interlocking features. For example, the lid 4 can include one or more indentations or grooves 32 so that the lid 4 and bottom 40 of the container can be placed together in a mated and more stabilized configuration. Further, as illustrated in Fig. 6, the bottom 40 of the container body 6 can contain stacking shoulders 42 which can fit, for example, into the grooves 32 in the lid 4. Optionally, the stacking shoulders 42 can contain a back draft. It should be appreciated that the grooves 32 of the lid 4 and the stacking shoulders 42 of the container body 6 can be arranged in a variety of forms and designs to allow for a mated and stabilized stacking configuration of the container systems 2.

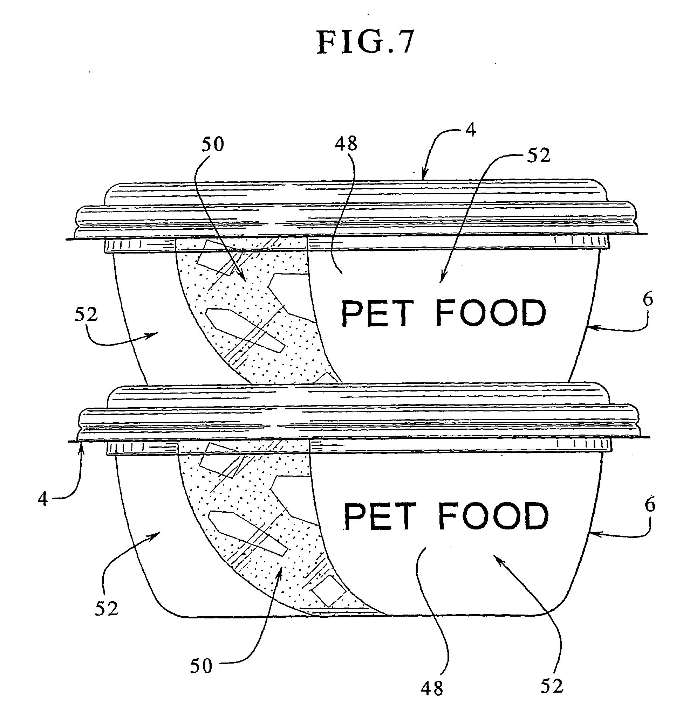

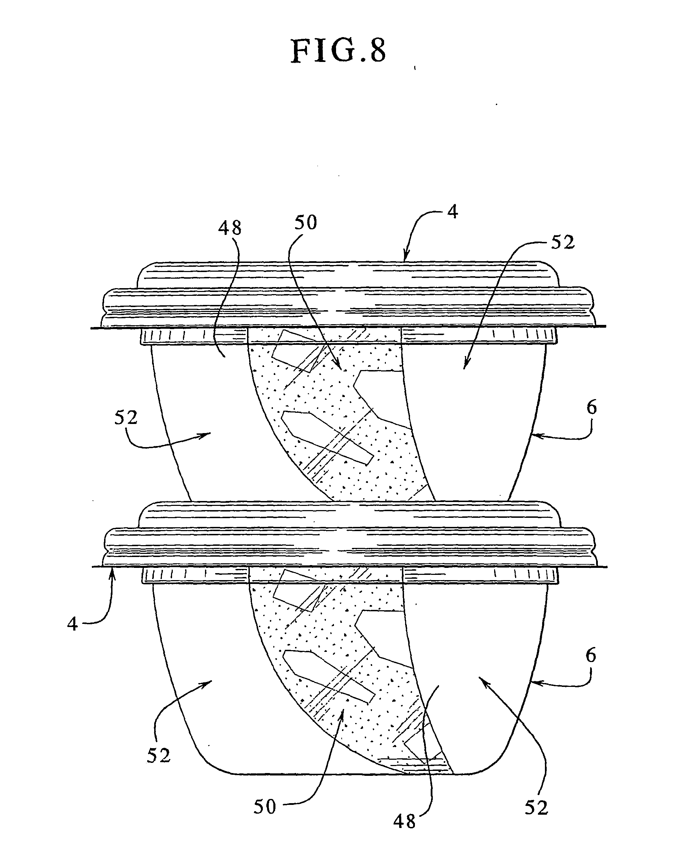

As illustrated in Figs. 7-8, the lid 4 is configured such that the container body 6 can rest securely on the lid 4. This feature provides two advantages to the containers. First two or more containers 2 can be stacked for storage. In addition, this feature allows the lid 4 to be placed on a flat surface and used as a tray after being removed from the container body. For example, the tray is used to support the container body 6 which rests upon it. In this configuration the tray can catch pet food that spills from the container as the food is being eaten. In certain embodiments the lid 4 has an outer circumference that is larger than the outer circumference of the container body so that the lid 4 has an increased chance of collecting spilled food.

As illustrated in Figs. 7-8, the container body 6 can include a label 48 that has one or more transparent portions 50 and one or more opaque portions 52. The opaque portions 52 of the label 48 can include, for example, aesthetic illustrations, trademarks, and other relevant labeling information. The transparent portions 50 can provide an area where, for example, the unique pet food arrangement is visible through the container body 6 and the label 48. It should be appreciated that the transparent portions 50 and the opaque portions 52 can be arranged in any suitable form, shape or design as part of the label 48.

The container can be a pouch. In such embodiments it is preferred that the pouch have a clear window or that the pouch be clear which will show the unique meld of meat, vegetable, grains, and pasta.

The container body 6 has a size that is suitable for providing a meal to a pet. Thus, the container size can vary depending upon the dietary requirements of the pet to be fed. In certain embodiments the container has an internal volume of about 300 mL.

## Claims

1. A pet food composition comprising a gravy and at least two ingredients selected from the group of ingredients consisting of meat, soy, vegetable, grains and pasta, **characterised in that** the gravy comprises water, starch, dextrose, glycine and a flavouring.

2. A pet food composition according to claim 1, wherein the pet food further comprises a spice, a vitamin mixture, a mineral mixture or combinations thereof.

3. A pet food composition according to claim 2, wherein the spice is selected from the group consisting of parsley, sage, rosemary, basil, thyme, chives and combinations thereof.

4. A pet food composition according to any one of claims 1 to 3, wherein the grain is selected from the group consisting of barley, wild rice, brown rice, oats, millet and combinations thereof.

5. A pet food composition according to any one of claims 1 to 4, wherein the vegetable is selected from the group consisting of potatoes, squash, zucchini, spinach, radishes, asparagus, tomatoes, cabbage, peas, carrots, corn, green beans, lima beans, broccoli, brussel sprouts, cauliflower, celery, cucumbers, turnips, yarns and combinations.

6. A pet food composition according to any one of claims 1 to 5, wherein the meat is selected from the group consisting of chicken, beef, pork, turkey, fish, lamb and combinations thereof.

7. A method for providing a pet food having increased consumer appeal comprising placing a pet food according to any one of claims 1 to 6 into a retortable container system.

## Patentansprüche

1. Eine Tierfutterzusammensetzung, eine Soße und wenigstens zwei Zutaten, ausgewählt aus der Gruppe von Zutaten, bestehend aus Fleisch, Soja, Gemüse, Getreide und Nudeln, umfassend, **gekennzeichnet dadurch, dass** die Soße Wasser, Stärke, Dextrose, Glycin und einen Aromastoff umfasst.

2. Eine Tierfutterzusammensetzung nach Anspruch 1, wobei das Tierfutter weiterhin ein Gewürz, eine Vitaminmischung, eine Mineralstoffmischung oder Kombinationen daraus umfasst.

3. Eine Tierfutterzusammensetzung nach Anspruch 2, wobei das Gewürz ausgewählt ist aus der Gruppe, bestehend aus Petersilie, Salbei, Rosmarin, Basilikum, Thymian, Schnittlauch und Kombinationen davon.

4. Eine Tierfutterzusammensetzung nach einem der Ansprüche 1 bis 3, wobei das Getreide ausgewählt ist aus der Gruppe, bestehend aus Gerste, Wildreis, Naturreis, Hafer, Hirse und Kombinationen davon.

5. Eine Tierfutterzusammensetzung nach einem der Ansprüche 1 bis 4, wobei das Gemüse ausgewählt ist aus der Gruppe, bestehend aus Kartoffeln, Kürbis, Zucchini, Spinat, Radieschen, Spargel, Tomaten, Kohl, Erbsen, Karotten, Mais, grünen Bohnen, Limabohnen, Broccoli, Rosenkohl, Blumenkohl, Sellerie, Gurken, Rüben, Süßkartoffeln und Kombinationen.

6. Eine Tierfutterzusammensetzung nach einem der Ansprüche 1 bis 5, wobei das Fleisch ausgewählt ist aus der Gruppe, bestehend aus Huhn, Rind, Schwein, Truthahn, Fisch, Lamm und Kombinationen davon.

7. Ein Verfahren zum Bereitstellen eines für den Verbraucher attraktiveren Tierfutters, das Platzieren eines Tierfutters nach einem der Ansprüche 1 bis 6 in ein sterilisationsfähiges Behältersystem umfassend.

## Revendications

1. Composition d'aliments pour animaux domestiques comprenant une sauce et au moins deux ingrédients choisis dans le groupe d'ingrédients comprenant la viande, le soja, les légumes, les céréales et les pâtes, **caractérisée en ce que** la sauce comprend de l'eau, de l'amidon, du dextrose, de la glycine et un arôme.

2. Composition d'aliments pour animaux domestiques selon la revendication 1, dans laquelle l'aliment pour animaux domestiques comprend en outre une épice, un mélange de vitamines, un mélange de sels minéraux ou leurs combinaisons.

3. Composition d'aliments pour animaux domestiques selon la revendication 2, dans laquelle l'épice est choisie dans le groupe comprenant le persil, la sauge, le romarin, le basilic, le thym, la ciboulette et leurs combinaisons.

4. Composition d'aliments pour animaux domestiques selon l'une quelconque des revendications 1 à 3, dans laquelle la céréale est choisie dans le groupe comprenant l'orge, le riz sauvage, le riz cargo, l'avoine, le millet et leurs combinaisons.

5. Composition d'aliments pour animaux domestiques selon l'une quelconque des revendications 1 à 4, dans laquelle le légume est choisi dans le groupe comprenant la pomme de terre, la courge, la courgette, l'épinard, le radis, l'asperge, la tomate, le chou, le pois, la carotte, le maïs, le haricot vert, le haricot de Lima, le brocoli, le chou de Bruxelles, de chou-fleur, le céleri, le concombre, le rutabaga, l'igname et leurs combinaisons.

6. Composition d'aliments pour animaux domestiques selon l'une quelconque des revendications 1 à 5, dans laquelle la viande est choisie dans le groupe comprenant le poulet, le boeuf, le porc, la dinde, le poisson, l'agneau et leurs combinaisons.

7. Procédé de fourniture d'un aliment pour animaux domestiques plus attractif pour le consommateur, comprenant le placement d'un aliment pour animaux domestiques selon l'une quelconque des revendications 1 à 6, dans un système de conteneur souple.
